(19) **Europäisches Patentamt / European Patent Office / Office européen des brevets**

(11) **EP 4 063 446 A1**

(12) # EUROPEAN PATENT APPLICATION
published in accordance with Art. 153(4) EPC

(43) Date of publication:
**28.09.2022 Bulletin 2022/39**

(21) Application number: **20890543.0**

(22) Date of filing: **21.10.2020**

(51) International Patent Classification (IPC):
**C08K 7/00** (2006.01)   **C08L 1/00** (2006.01)
**C08L 101/00** (2006.01)

(52) Cooperative Patent Classification (CPC):
**C08K 7/00; C08L 1/00; C08L 101/00**

(86) International application number:
**PCT/JP2020/039532**

(87) International publication number:
**WO 2021/100394 (27.05.2021 Gazette 2021/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.11.2019 JP 2019209817**

(71) Applicant: **Sumitomo Rubber Industries, Ltd.**
**Kobe-shi, Hyogo 651-0072 (JP)**

(72) Inventors:
• **MIYAZAKI, Sumiko**
**Kobe-shi, Hyogo 651-0072 (JP)**
• **SATO, Daisuke**
**Kobe-shi, Hyogo 651-0072 (JP)**

(74) Representative: **TBK**
**Bavariaring 4-6**
**80336 München (DE)**

(54) **POLYMER COMPOSITION**

(57) The present disclosure provides a polymer composition having excellent physical properties including viscoelastic properties (E*, tan δ), durability, and impact resistance and excellent microfibrillated plant fiber orientation. The present disclosure relates to a polymer composition containing a polymer and a microfibrillated plant fiber, the polymer composition satisfying the following relationships (1) and (2): E*a/E*b ≥ 1.3 (1); and TBa/FBa ≥ 2.6 (2) wherein E*a/E*b represents the ratio of the complex modulus E*a (MPa) in an extrusion direction to the complex modulus E*b (MPa) in a direction orthogonal to the extrusion direction, and TBa/FBa represents the ratio of the stress at break TBa (MPa) during stretching in the extrusion direction to the stress FBa (MPa) at elongation of 50% of the elongation at break during stretching in the extrusion direction.

**Description**

TECHNICAL FIELD

The present disclosure relates to a polymer composition.

BACKGROUND ART

Polymer compositions containing polymers such as rubbers or resins and various fillers such as reinforcing agents have been widely used. It has been proposed to use various organic short fibers as fillers for such polymer compositions in order to impart excellent properties such as strength; for example, Patent Literature 1 discloses a rubber composition including a masterbatch containing a microfibrillated plant fiber.

The rubber composition of Patent Literature 1, however, does not satisfy the parameters specified in the present application, and still has room for improvement in terms of conveniently imparting excellent physical properties such as viscoelastic properties (e.g., E*, tan $\delta$) and excellent filler orientation.

CITATION LIST

PATENT LITERATURE

Patent Literature 1: JP 2013-253222 A

SUMMARY OF DISCLOSURE

TECHNICAL PROBLEM

The present disclosure has been made in view of such a current state of the art and aims to provide a polymer composition having excellent physical properties including viscoelastic properties (E*, tan $\delta$), durability, and impact resistance and excellent microfibrillated plant fiber orientation.

SOLUTION TO PROBLEM

The present disclosure relates to a polymer composition, containing:

at least one polymer; and
at least one microfibrillated plant fiber,
the polymer composition satisfying the following relationships (1) and (2):

$$E^*a/E^*b \geq 1.3 \quad (1);$$

and

$$TBa/FBa \geq 2.6 \quad (2)$$

wherein E*a/E*b represents a ratio of a complex modulus E*a (MPa) in an extrusion direction to a complex modulus E*b (MPa) in a direction orthogonal to the extrusion direction, and TBa/FBa represents a ratio of a stress at break TBa (MPa) during stretching in the extrusion direction to a stress FBa (MPa) at elongation of 50% of an elongation at break during stretching in the extrusion direction.

Preferably, the polymer composition satisfies E*a/E*b ≥ 1.5.
Preferably, the polymer composition satisfies E*a/E*b ≥ 2.0.
Preferably, the polymer composition satisfies TBa/FBa ≥ 3.0.
Preferably, the polymer composition satisfies TBa/FBa ≥ 3.4.
Preferably, the polymer composition contains 0.5 to 30 parts by mass of the microfibrillated plant fiber per 100 parts by mass of the polymer.
Preferably, the microfibrillated plant fiber in the polymer composition has an average aspect ratio of 10 to 1000.

Preferably, the microfibrillated plant fiber in the polymer composition has an average fiber diameter of 10 μm or less.

Preferably, the polymer composition is prepared by a method including:

step 1 of preparing a liquid mixture containing the microfibrillated plant fiber, at least one oil, and at least one organic acid amine; and
step 2 of preparing a polymer composition containing the liquid mixture and the polymer.

Preferably, in step 1, the oil includes at least one selected from the group consisting of glycerol fatty acid triesters of plant origin and saponified products of glycerol fatty acid triesters of plant origin, and the organic acid amine contains at least one selected from the group consisting of aliphatic carboxylic acids, alicyclic carboxylic acids, and aromatic carboxylic acids.

Preferably, the organic acid amine contains an aliphatic carboxylic acid.

Preferably, the polymer includes at least one rubber selected from the group consisting of natural rubbers, polybutadiene rubbers, and styrene-butadiene rubbers.

Preferably, the polymer composition contains at least one selected from the group consisting of carbon black and silica.

ADVANTAGEOUS EFFECTS OF DISCLOSURE

The present disclosure relates to a polymer composition which contains a polymer and a microfibrillated plant fiber, and satisfies relationships (1) and (2) wherein $E^*a/E^*b$ represents the ratio of the complex modulus $E^*a$ (MPa) in an extrusion direction to the complex modulus $E^*b$ (MPa) in a direction orthogonal to the extrusion direction, and $TBa/FBa$ represents the ratio of the stress at break $TBa$ (MPa) during stretching in the extrusion direction to the stress $FBa$ (MPa) at elongation of 50% of the elongation at break during stretching in the extrusion direction. Thus, the polymer composition has excellent physical properties including viscoelastic properties ($E^*$, $\tan \delta$), durability, and impact resistance, and excellent microfibrillated plant fiber orientation.

DESCRIPTION OF EMBODIMENTS

(Polymer composition)

The polymer composition of the present disclosure contains a polymer and a microfibrillated plant fiber and satisfies relationships (1) and (2). Such a polymer composition has excellent physical properties including viscoelastic properties ($E^*$, $\tan \delta$), durability, and impact resistance, and excellent microfibrillated plant fiber orientation.

The mechanism for this advantageous effect is not clear, but is believed to be as follows.

When a composition containing a polymer and a microfibrillated plant fiber satisfies relationship (1), since the $E^*$ anisotropy is considered to arise from the orientation of the microfibrillated plant fiber, it is believed that the orientation of the fiber in the polymer is high. Further, when the composition satisfies relationship (2), since the stress at break is at least 2.6 times higher than the stress at 50% elongation at break, it is believed that the composition is resistant to impact and vibration in the direction perpendicular to the orientation direction. Thus, it is believed that the polymer composition has excellent physical properties including viscoelastic properties ($E^*$ (rigidity), $\tan \delta$ (fuel economy)) and impact resistance, and excellent microfibrillated plant fiber orientation, thereby providing a composition resistant to vibration and impact.

The polymer composition satisfies the following relationship (1):

$$E^*a/E^*b \geq 1.3 \quad (1)$$

wherein $E^*a/E^*b$ represents the ratio of the complex modulus $E^*a$ (MPa) in an extrusion direction to the complex modulus $E^*b$ (MPa) in a direction orthogonal to the extrusion direction (the complex modulus in the direction perpendicular to the extrusion direction).

From the standpoints of physical properties including viscoelastic properties ($E^*$, $\tan \delta$), durability, and impact resistance, and microfibrillated plant fiber orientation, $E^*a/E^*b$ may be 1.4 or higher, 1.5 or higher, 1.8 or higher, 2.0 or higher, or 2.2 or higher. From the standpoint of crack growth resistance in the extrusion direction, $E^*a/E^*b$ may be 8.0 or lower, 6.0 or lower, or 5.0 or lower, although the upper limit is not limited.

The polymer composition satisfies the following relationship (2):

$$TBa/FBa \geq 2.6 \quad (2)$$

wherein TBa/FBa represents the ratio of the stress at break TBa (MPa) during stretching in the extrusion direction (the stress at break when the composition is stretched in the extrusion direction) to the stress FBa (MPa) at elongation of 50% of the elongation at break during stretching in the extrusion direction (the stress when the composition is stretched in the extrusion direction by 50% of the elongation at break (half of the elongation at break) when the composition is stretched in the extrusion direction).

From the standpoints of physical properties including viscoelastic properties (E*, tan δ), durability, and impact resistance, and microfibrillated plant fiber orientation, TBa/FBa may be 3.0 or higher, 3.1 or higher, 3.2 or higher, 3.4 or higher, or 3.5 or higher. From the standpoint of vibration resistance in the extrusion direction, TBa/FBa may be 8.0 or lower, 6.0 or lower, or 5.0 or lower, although the upper limit is not limited.

Thus, the present disclosure solves the problem (purpose) of improving physical properties including viscoelastic properties (E*, tan δ), durability, and impact resistance, and microfibrillated plant fiber orientation by formulating a polymer composition containing a polymer and a microfibrillated plant fiber to satisfy relationships (1) and (2). In other words, the parameters of relationships (1) and (2) do not define the problem (purpose), and the problem herein is to improve physical properties including viscoelastic properties (E*, tan δ), durability, and impact resistance, and microfibrillated plant fiber orientation. In order to solve this problem, the polymer composition has been formulated to satisfy the parameters.

The polymer composition preferably satisfies the following relationship (1-1):

$$1.0 \text{ MPa} \leq E^*a \leq 100 \text{ MPa} \quad (1-1)$$

wherein E*a represents the complex modulus (MPa) in the extrusion direction.

From the standpoints of physical properties including viscoelastic properties (E*, tan δ), durability, and impact resistance, and microfibrillated plant fiber orientation, the lower limit of E*a may be 1.2 MPa or more, 1.5 MPa or more, 6 MPa or more, 8 MPa or more, 10 MPa or more, or 12 MPa or more. From the standpoint of impact resistance in the extrusion direction, the upper limit is more preferably, but not limited to, 90 MPa or less, still more preferably 60 MPa or less, particularly preferably 40 MPa or less, most preferably 20 MPa or less.

The polymer composition preferably satisfies the following relationship (2-1):

$$8 \text{ MPa} \leq TBa \leq 50 \text{ MPa} \quad (2-1)$$

wherein TBa represents the stress at break (MPa) during stretching in the extrusion direction.

From the standpoints of physical properties including viscoelastic properties (E*, tan δ), durability, and impact resistance, and microfibrillated plant fiber orientation, the lower limit of TBa may be 10 MPa or more, 12 MPa or more, 15 MPa or more, 18 MPa or more, 20 MPa or more, 25 MPa or more, or 30 MPa or more. From the standpoint of vibration resistance in the extrusion direction, the upper limit is more preferably, but not limited to, 45 MPa or less.

Here, relationship (1), (2), (1-1), or (2-1) may be satisfied by sufficiently orienting the microfibrillated plant fiber in the polymer. Specific examples of such methods include (a) a method of mixing the polymer with a dispersion prepared by dispersing the microfibrillated plant fiber in an oil, and (b) a method of using an organic acid amine, which methods may be used alone or in appropriate combination.

In general, in order to obtain good dispersion of a microfibrillated plant fiber, which itself is water-soluble, in a hydrophobic polymer (e.g., rubber or resin), it is necessary to hydrophobize (modify) the microfibrillated plant fiber to obtain a modified microfibrillated plant fiber, and prepare a wet masterbatch from it. Moreover, a water-soluble polymer such as carboxymethylcellulose (CMC) or polyvinyl alcohol (PVA) is generally used as a dispersant in the preparation of the wet masterbatch. In contrast, when for example a polymer is mixed with a dispersion prepared by previously dispersing a microfibrillated plant fiber in an oil using a specific dispersant (organic acid amine), the resulting composition provides physical properties including viscoelastic properties (E*, tan δ), durability, and impact resistance, and microfibrillated plant fiber orientation which are equivalent or superior to those obtained with a conventional wet masterbatch containing a modified microfibrillated plant fiber, even when the microfibrillated plant fiber used is an unmodified microfibrillated plant fiber.

Here, E*a and E*b are the complex moduli measured at a temperature of 70°C and a dynamic strain of 1% as described later in EXAMPLES. TBa and FBa are measured at a standard test temperature (23 ± 2°C) in accordance with JIS K 6251:2017 as described later in EXAMPLES. When the polymer is a rubber, E*a, E*b, TBa, and FBa are the physical properties of the vulcanized rubber composition.

The extrusion direction and the direction orthogonal to the extrusion direction refer to the direction in which a forming material is extruded from the extrusion port of an extruder and the direction perpendicular to the direction, respectively. For a tire, it is desirable that the extrusion direction is the tire circumferential direction, and the direction orthogonal to the extrusion direction is the tire radial direction. The tire circumferential direction and the tire radial direction are specifically shown in Fig. 1 of JP 2009-202865 A, for example.

(Polymer)

Any polymer may be used, and examples include known polymers such as rubbers and resins. These polymers may be used alone, or two or more of these may be used in combination.

Examples of rubbers include rubbers commonly used in the rubber industry, including diene rubbers such as natural rubbers (NR), polyisoprene rubbers (IR), polybutadiene rubbers (BR), styrene-butadiene rubbers (SBR), styrene-isoprene-butadiene rubbers (SIBR), ethylenepropylene-diene rubbers (EPDM), chloroprene rubbers (CR), and acrylonitrile butadiene rubbers (NBR); butyl-based rubbers such as halogenated butyl rubbers (X-IIR) and butyl rubbers (IIR); and fluororubbers. For use in a tire, NR, BR, SBR, and the like are suitable from the standpoint of tire physical properties.

Non-limiting examples of NR include those commonly used in the tire industry, such as SIR20, RSS#3, and TSR20. Modified NR may be used, and examples include modified natural rubbers such as epoxidized natural rubbers (ENR), deproteinized natural rubbers (DPNR), highly purified natural rubbers (UPNR), hydrogenated natural rubbers (HNR), and grafted natural rubbers.

The amount of NR based on 100% by mass of the polymers in the polymer composition is not limited and may be selected appropriately according to the application. For example, from the standpoint of fuel economy, the amount is preferably 20% by mass or more, more preferably 30% by mass or more, still more preferably 40% by mass or more. The upper limit of the amount may be, but not limited to, 100% by mass.

Non-limiting examples of BR include those commonly used in the tire industry, such as high-cis BR, 1,2-syndiotactic polybutadiene crystal-containing BR (SPB-containing BR), polybutadiene rubbers synthesized using rare earth catalysts (rare earth-catalyzed BR), and tin-modified polybutadiene rubbers modified with tin compounds (tin-modified BR). Usable commercial products are available from Ube Industries, Ltd., JSR Corporation, Asahi Kasei Corporation, Zeon Corporation, etc. These may be used alone or in combinations of two or more.

From the standpoint of good flexural fatigue resistance, the cis content of the BR is preferably 80% by mass or more, more preferably 85% by mass or more, still more preferably 90% by mass or more, particularly preferably 95% by mass or more. As used herein, the cis content is determined by infrared absorption spectrum analysis.

The amount of BR based on 100% by mass of the polymers in the polymer composition is not limited and may be selected appropriately according to the application. For example, from the standpoint of low-temperature characteristics, the amount is preferably 20% by mass or more, more preferably 30% by mass or more, still more preferably 40% by mass or more. Moreover, the upper limit of the amount is preferably, but not limited to, 80% by mass or less, more preferably 70% by mass or less, still more preferably 60% by mass or less.

Non-limiting examples of SBR include emulsion-polymerized styrene-butadiene rubbers (E-SBR) and solution-polymerized styrene-butadiene rubbers (S-SBR). Usable commercial SBR products include those manufactured or sold by Sumitomo Chemical Co., Ltd., JSR Corporation, Asahi Kasei Corporation, Zeon Corporation, Dow Inc., etc.

The amount of SBR based on 100% by mass of the polymers in the polymer composition is not limited and may be selected appropriately according to the application. For example, from the standpoint of grip performance, the amount is preferably 20% by mass or more, more preferably 30% by mass or more, still more preferably 40% by mass or more. Moreover, the upper limit of the amount may be, but not limited to, 100% by mass.

The BR and SBR may be either unmodified or modified BR and SBR, respectively. The modified BR or SBR may be any BR or SBR having a functional group interactive with a filler such as silica. Examples include chain end-modified BR or SBR obtained by modifying at least one chain end of BR or SBR with a compound (modifier) having the functional group (chain end-modified BR or SBR terminated with the functional group); backbone-modified BR or SBR having the functional group in the backbone; backbone- and chain end-modified BR or SBR having the functional group in both the backbone and chain end (e.g., backbone- and chain end-modified BR or SBR in which the backbone has the functional group and at least one chain end is modified with the modifier); and chain end-modified BR or SBR into which a hydroxy or epoxy group has been introduced by modification (coupling) with a polyfunctional compound having two or more epoxy groups in the molecule.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxy, nitrile, pyridyl, alkoxy, hydroxy, oxy, and epoxy groups. These functional groups may be substituted. From the standpoint of tire physical properties, amino (preferably amino whose hydrogen atom is replaced with a C1-C6 alkyl group), alkoxy (preferably C1-C6 alkoxy), and alkoxysilyl (preferably C1-C6 alkoxysilyl) groups are preferred among these.

Non-limiting examples of resins include thermoplastic resins such as polyethylenes (PE), polypropylenes (PP), polyvinyl chlorides, polystyrenes, polyvinylidene chlorides, fluororesins (e.g., homopolymers or copolymers of tetrachloroethylene, hexafluoropropylene, chlorotrifluoroethylene, vinylidene fluoride, vinyl fluoride, perfluoroalkyl vinyl ethers, or the like), (meth)acrylic resins (e.g., homopolymers or copolymers of (meth)acrylic acid, (meth)acrylonitrile, (meth)acrylic acid esters, (meth)acrylamide, or the like), polyamide resins (nylon resins, PA), polyesters (e.g., aromatic polyesters, aliphatic polyesters, unsaturated polyesters), polylactic acid resins, polylactic acid-polyester copolymer resins, acrylonitrile-butadiene-styrene copolymers (ABS resins), polycarbonates (e.g., reaction products of bisphenols such as bisphenol A or derivatives thereof with phosgene or phenyldicarbonate), polyphenylene oxides, (thermoplastic) polyurethanes (e.g., copolymers of diisocyanates and diols), polyacetals (POM), vinyl ether resins, polysulfone resins (e.g., copolymers of 4,4'-dichlorodiphenylsulfone and bisphenol A or the like), and cellulosic resins (e.g., triacetylated cellulose, diacetylated cellulose).

(Microfibrillated plant fiber)

The polymer composition contains at least one microfibrillated plant fiber. For example, it may suitably contain at least one microfibrillated plant fiber and at least one rubber selected from the group consisting of NR, BR, and SBR.
From the standpoints of physical properties including viscoelastic properties (E*, tan $\delta$), durability, and impact resistance, microfibrillated plant fiber orientation and dispersion, and other properties, the polymer composition preferably contains 0.5 to 30 parts by mass of the microfibrillated plant fiber(s) per 100 parts by mass of the polymers. The lower limit of the amount is more preferably 1 part by mass or more, still more preferably 3 parts by mass or more, particularly preferably 4 parts by mass or more, most preferably 5 parts by mass or more, and may be 10 parts by mass or more. The upper limit is more preferably 25 parts by mass or less, still more preferably 20 parts by mass or less, particularly preferably 15 parts by mass or less, most preferably 12.5 parts by mass or less.
From the standpoint of properties such as tensile strength and abrasion resistance, cellulose microfibrils are preferred as the microfibrillated plant fiber. Any cellulose microfibril derived from naturally-occurring materials may be used. Examples include those derived from: resource biomass such as fruits, grains, and root vegetables; wood, bamboo, hemp, jute, and kenaf, and pulp, paper, or cloth produced therefrom; waste biomass such as agricultural waste, food waste, and sewage sludge; unused biomass such as rice straw, wheat straw, and thinnings; and celluloses produced by ascidians, acetic acid bacteria, or other organisms. These microfibrillated plant fibers may be used alone, or two or more of these may be used in combination.
As used herein, the term "cellulose microfibrils" typically refers to cellulose fibers having an average fiber diameter of not more than several tens of micrometers (e.g., not more than 20 to 30 $\mu$m), preferably not more than 10 $\mu$m, more typically cellulose fibers having a microstructure with an average fiber diameter of not more than 500 nm (microfibrillated plant fibers having an average fiber diameter of not more than several tens of micrometers, not more than 10 $\mu$m, or not more than 500 nm) formed by aggregation of cellulose molecules. For example, typical cellulose microfibrils may be formed as aggregates of cellulose fibers having an average fiber diameter as indicated above.
The microfibrillated plant fiber may be produced by any method. For example, it may be produced by optionally chemically treating the raw material of a cellulose microfibril with sodium hydroxide or other alkali, followed by mechanically grinding or beating using a refiner, a twin screw kneader (twin screw extruder), a twin screw kneading extruder, a high pressure homogenizer, a media-agitating mill, a stone mill, a grinder, a vibration mill, a sand grinder, or other device. With such methods, a substantially lignin-free microfibrillated plant fiber can be produced because lignin is separated from the raw material by the chemical treatment. Other methods include a method of treating the raw material of a cellulose microfibril under ultra-high pressure.
The microfibrillated plant fiber may be a product of, for example, Sugino Machine Limited or Daicel FineChem Ltd.
As described above, the microfibrillated plant fiber can be sufficiently oriented in the polymer even when it is an unmodified microfibrillated plant fiber produced as described above or by other methods. Of course, however, also usable, in addition to unmodified microfibrillated plant fibers, are those subjected to treatment such as oxidation or any of various chemical modifications, as well as those obtained by subjecting naturally-occurring materials which can be sources of cellulose microfibrils (e.g., wood, pulp, bamboo, hemp, jute, kenaf, agricultural waste, cloth, paper, ascidian cellulose) as cellulose materials to treatment such as oxidation or any of various chemical modifications, followed by optional fibrillation (e.g., chemically modified microfibrillated plant fibers).
Embodiments of the chemical modification of the microfibrillated plant fiber include, for example, esterification, etherification, acetalization, and other treatments. Specific preferred examples include acylation such as acetylation, cyanoethylation, amination, sulfonate esterification, phosphate esterification, alkyl esterification, alkyl etherification, complex esterification, $\beta$-ketoesterification, alkylation such as butylation, and chlorination. Other examples include alkyl carbamation and aryl carbamation.
The chemically modified microfibrillated plant fiber preferably has been chemically modified to have a degree of substitution within the range of 0.2 to 2.5. The term "degree of substitution" refers to the average number of cellulosic hydroxy groups replaced with other functional groups by chemical modification per glucose ring unit, and the theoretical maximum is three. The degree of substitution is more preferably within the range of 0.3 to 2.5, still more preferably within the range of 0.5 to 2.3, particularly preferably within the range of 0.5 to 2.0. In the case where a combination of two or more chemically modified microfibrillated plant fibers is used, the degree of substitution is calculated as the average of all the chemically modified microfibrillated plant fibers.

The degree of substitution of the chemically modified microfibrillated plant fiber can be determined by, for example, titration using 0.5 N NaOH and 0.2 N HCl, NMR, or infrared absorption spectrometry.

A suitable example of the chemically modified microfibrillated plant fiber is an aminated microfibrillated plant fiber having a degree of substitution within the range of 0.3 to 2.5. The degree of substitution is preferably 0.3 to 2.3, more preferably 0.5 to 2.0, still more preferably 0.7 to 2.0, particularly preferably 0.9 to 1.8.

Preferably, the chemically modified microfibrillated plant fiber has a degree of substitution within the range of 0.3 to 2.5 when it is an acetylated microfibrillated plant fiber, has a degree of substitution within the range of 0.3 to 1.8 when it is a sulfonate esterified microfibrillated plant fiber, has a degree of substitution within the range of 0.3 to 1.8 when it is an alkyl esterified microfibrillated cellulose, has a degree of substitution within the range of 0.4 to 1.8 when it is a complex esterified microfibrillated cellulose, has a degree of substitution within the range of 0.3 to 1.8 when it is a β-ketoesterified microfibrillated cellulose, has a degree of substitution within the range of 0.3 to 1.8 when it is an alkyl carbamated microfibrillated cellulose, or has a degree of substitution within the range of 0.3 to 1.8 when it is an aryl carbamated microfibrillated cellulose.

The acetylation may be carried out, for example, by adding acetic acid, concentrated sulfuric acid, and acetic anhydride to a microfibrillated plant fiber for reaction. Specifically, it may be carried out by conventional methods such as by reacting a microfibrillated plant fiber with acetic anhydride in a solvent mixture of acetic acid and toluene in the presence of a sulfuric acid catalyst to cause an acetylation reaction, and then replacing the solvent with water.

The amination may be carried out by, for example, known methods such as tosyl esterification or by performing oxidation using an N-oxyl compound such as 2,2,6,6-tetramethylpiperidine-1-oxyl (TEMPO), followed by, for example, reaction with an amine compound (e.g., a C1-C30 primary amine compound such as oleylamine, preferably a C3-C25 primary amine compound having a saturated or unsaturated bond, more preferably a C6-C23 primary amine compound having an unsaturated bond, still more preferably a C10-C20 primary amine compound having an unsaturated double bond) or a quaternary alkylammonium salt (preferably a C1-C30 quaternary alkylammonium salt, more preferably a C1-C20 quaternary alkylammonium halide such as hexadecyltrimethylammonium chloride) in an alcohol (e.g., a C1-C10 alcohol such as ethanol, preferably a C1-C5 alcohol, more preferably a C1-C4 primary alcohol) to cause a nucleophilic substitution reaction.

The sulfonate esterification may be carried out by, for example, a simple procedure that only includes dissolving a microfibrillated plant fiber in sulfuric acid and introducing the solution into water. Alternatively, it may be carried out by treatment with sulfuric anhydride gas, treatment with chlorosulfonic acid and pyridine, or other methods.

The phosphate esterification may be carried out, for example, by treating a microfibrillated plant fiber treated with dimethylamine or other chemical with phosphoric acid and urea.

The alkyl esterification may be carried out by, for example, a Schotten-Baumann method in which a microfibrillated plant fiber is reacted with a carboxylic acid chloride under basic conditions. Moreover, the alkyl etherification may be carried out by, for example, a Williamson method in which a microfibrillated plant fiber is reacted with an alkyl halide under basic conditions.

The chlorination may be carried out, for example, by adding thionyl chloride in dimethylformamide (DMF), followed by heating.

The complex esterification may be carried out, for example, by reacting a microfibrillated plant fiber with two or more carboxylic anhydrides or carboxylic acid chlorides under basic conditions.

The β-ketoesterification may be carried out, for example, by reacting a microfibrillated plant fiber with a diketene or an alkyl ketene dimer or by performing a transesterification reaction between a microfibrillated plant fiber and a β-ketoester compound such as an alkyl acetoacetate.

The alkyl carbamation may be carried out, for example, by reacting a microfibrillated plant fiber with an alkyl isocyanate in the presence of a basic catalyst or a tin catalyst.

The aryl carbamation may be carried out, for example, by reacting a microfibrillated plant fiber with an aryl isocyanate in the presence of a basic catalyst or a tin catalyst.

The microfibrillated plant fiber in the polymer composition preferably has an average fiber diameter of 10 $\mu$m or less from the standpoints of physical properties including viscoelastic properties (E*, tan $\delta$), durability, and impact resistance, and microfibrillated plant fiber orientation and dispersion. The average fiber diameter is more preferably 500 nm or less, still more preferably 200 nm or less, particularly preferably 100 nm or less, most preferably 50 nm or less. Moreover, the lower limit of the average fiber diameter is preferably, but not limited to, 3 nm or greater, more preferably 4 nm or greater, still more preferably 10 nm or greater, particularly preferably 20 nm or greater, because the entangled microfibrillated plant fibers are less likely to be separated from each other and thus less likely to be dispersed.

The microfibrillated plant fiber in the polymer composition preferably has an average fiber length of 100 nm or longer, more preferably 300 nm or longer, still more preferably 500 nm or longer, particularly preferably 1 $\mu$m or longer, most preferably 2 $\mu$m or longer. Moreover, the upper limit of the average fiber length is preferably, but not limited to, 5 mm or less, more preferably 50 $\mu$m or less, still more preferably 20 $\mu$m or less, particularly preferably 10 $\mu$m or less, most preferably 5 $\mu$m or less. When the microfibrillated plant fiber has an average fiber length of less than the lower limit or more than the upper limit, it shows the same tendencies as described for the average fiber diameter.

In the case where a combination of two or more microfibrillated plant fibers is used, the average fiber diameter and the average fiber length are each calculated as the average of all the microfibrillated plant fibers. Moreover, the microfibrillated plant fiber more preferably has an average fiber diameter in the suitable numerical range indicated above and an average fiber length in the suitable numerical range indicated above.

The microfibrillated plant fiber in the polymer composition preferably has an average aspect ratio of 10 to 1000 from the standpoints of physical properties including viscoelastic properties (E*, tan $\delta$), durability, and impact resistance, and microfibrillated plant fiber orientation and dispersion. The lower limit of the average aspect ratio is preferably 50 or more, more preferably 100 or more. The upper limit is preferably 1000 or less, more preferably 900 or less, still more preferably 800 or less.

Here, the average aspect ratio can be calculated by the following equation.

Average aspect ratio = Average fiber length/Average fiber diameter

Moreover, the microfibrillated plant fiber more preferably has average fiber diameter and length in the suitable ranges indicated above and an average aspect ratio in the suitable numerical range indicated above.

Herein, the average fiber diameter and average fiber length of the microfibrillated plant fiber can be measured by image analysis using scanning electron micrographs, image analysis using transmission electron micrographs, image analysis using atomic force micrographs, X-ray scattering data analysis, the aperture impedance method (Coulter principle), or other methods.

The polymer composition containing at least one polymer and at least one microfibrillated plant fiber and satisfying relationships (1) and (2) can be prepared by, for example, a method including step 1 of preparing a liquid mixture containing the microfibrillated plant fiber, at least one oil, and at least one organic acid amine, and step 2 of preparing a polymer composition containing the liquid mixture and the polymer. As long as the production method includes the above-mentioned steps, it may include other steps. Moreover, each step may be performed once or repeated two or more times.

Step 1 of preparing a liquid mixture containing the microfibrillated plant fiber, at least one oil, and at least one organic acid amine can be carried out by successively dropping, injecting, or otherwise adding the microfibrillated plant fiber, oil, and organic acid amine and mixing them, followed by, for example, dispersion in a known manner using a high-speed homogenizer, an ultrasonic homogenizer, a colloid mill, a blender mill, or other device. The temperature or time of the preparation can be appropriately set within a usual range so that the microfibrillated plant fiber is sufficiently dispersed in the oil, or can be appropriately adjusted while measuring the viscosity of the liquid mixture so that it has a desired viscosity.

In the liquid mixture, the mixing ratio of the oil to the microfibrillated plant fiber (solids) (oil content (parts by mass)/microfibrillated plant fiber content (parts by mass)) is preferably 10/90 to 90/10, more preferably 20/80 to 80/20, still more preferably 30/70 to 70/30, particularly preferably 40/60 to 60/40, from the standpoints of physical properties including viscoelastic properties (E*, tan $\delta$), durability, and impact resistance, and microfibrillated plant fiber orientation and dispersion. For example, the mixing ratio may be 50/50.

In the liquid mixture, the amount of the organic acid amine(s) per 100 parts by mass of the microfibrillated plant fiber(s) (solids) is preferably within the range of 0.1 to 50 parts by mass from the standpoints of physical properties including viscoelastic properties (E*, tan $\delta$), durability, and impact resistance, and microfibrillated plant fiber orientation and dispersion. The lower limit of the amount is more preferably 5 parts by mass or more, still more preferably 10 parts by mass or more, particularly preferably 15 parts by mass or more, most preferably 20 parts by mass or more. The upper limit is more preferably 45 parts by mass or less, still more preferably 40 parts by mass or less.

(Oil)

Non-limiting examples of the oil include known oils such as process oils, vegetable oils, and mixtures thereof. Examples of the process oils include paraffinic process oils, aromatic process oils, naphthenic process oils, and low polycyclic aromatic (PCA) process oils such as TDAE and MES. Examples of the vegetable oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. These may be used alone or in combinations of two or more.

From the standpoint of life cycle assessment (LCA), the oil is preferably at least one glycerol fatty acid triester of plant origin (vegetable oil). Here, the term "glycerol fatty acid triester" refers to an ester of fatty acids with glycerol and is also called a triglyceride or tri-O-acylglycerol.

It is known that the fatty acids constituting glycerol fatty acid triesters of plant origin usually include palmitic acid (carbon number: 16, unsaturated bond number: 0), stearic acid (carbon number: 18, unsaturated bond number: 0), oleic acid (carbon number: 18, unsaturated bond number: 1), and linoleic acid (carbon number: 18, unsaturated bond number: 2) as main components. The combined amount of palmitic acid, stearic acid, oleic acid, and linoleic acid based on 100% by mass of the constituent fatty acids is usually 80% by mass or more, preferably 90% by mass or more.

In the glycerol fatty acid triester, the amount of saturated fatty acids based on 100% by mass of the constituent fatty acids is preferably 10 to 25% by mass. The lower limit is more preferably 12% by mass or more, while the upper limit is more preferably 20% by mass or less, still more preferably 18% by mass or less, particularly preferably 15% by mass or less, most preferably 14% by mass or less.

In the glycerol fatty acid triester, the amount of monovalent unsaturated fatty acids having one unsaturated bond based on 100% by mass of the constituent fatty acids is preferably less than 50% by mass, more preferably 45% by mass or less, still more preferably 40% by mass or less, particularly preferably 35% by mass or less, most preferably 30% by mass or less. The lower limit is preferably, but not limited to, 8% by mass or more, more preferably 14% by mass or more, still more preferably 20% by mass or more, particularly preferably 23% by mass or more.

In the glycerol fatty acid triester, the amount of polyvalent unsaturated fatty acids having two or more unsaturated bonds based on 100% by mass of the constituent fatty acids is preferably 50% by mass or more, more preferably 55% by mass or more, still more preferably 60% by mass or more, particularly preferably 63% by mass or more. The upper limit is preferably, but not limited to, 90% by mass or less, more preferably 80% by mass or less, still more preferably 70% by mass or less, particularly preferably 65% by mass or less.

In the glycerol fatty acid triester, the amount of divalent unsaturated fatty acids having two unsaturated bonds based on 100% by mass of the constituent fatty acids is preferably 35 to 80% by mass, more preferably 40 to 70% by mass, still more preferably 45 to 65% by mass, particularly preferably 52 to 56% by mass. Moreover, the amount of trivalent unsaturated fatty acids having three unsaturated bonds based on 100% by mass of the constituent fatty acids is preferably 3 to 25% by mass, more preferably 5 to 15% by mass, still more preferably 8 to 12% by mass.

In the glycerol fatty acid triester, the total amount of unsaturated fatty acids based on 100% by mass of the constituent fatty acids is preferably 75 to 90% by mass, more preferably 80 to 88% by mass, still more preferably 82 to 88% by mass, particularly preferably 85 to 88% by mass.

The glycerol fatty acid triester preferably satisfies the relationship (A) below.

The lower limit in relationship (A) is preferably 100 or more, more preferably 120 or more, still more preferably 140 or more, particularly preferably 150 or more, most preferably 155 or more, while the upper limit is preferably 190 or less, more preferably 180 or less, still more preferably 170 or less, particularly preferably 165 or less.

```
     80 ≤ (the amount (% by mass) of monovalent

unsaturated fatty acids having one unsaturated bond based

on 100% by mass of the constituent fatty acids) × 1

(unsaturated bond number) + (the amount (% by mass) of

divalent unsaturated fatty acids having two unsaturated

bonds based on 100% by mass of the constituent fatty acids)

× 2 (unsaturated bond number) + (the amount (% by mass) of

trivalent unsaturated fatty acids having three unsaturated

bonds based on 100% by mass of the constituent fatty acids)

× 3 (unsaturated bond number) ≤ 200    (A)
```

In the glycerol fatty acid triester that is of plant origin, the unsaturated bonds of the constituent fatty acids are usually double bonds.

The constituent fatty acids of the glycerol fatty acid triester preferably have an average carbon number of 15 to 21, more preferably 16 to 20, still more preferably 17 to 19.

Herein, the average carbon number of the constituent fatty acids is calculated using the following equation (D):

$$\text{Average carbon number of constituent fatty acids} = \Sigma \text{ (the amount (\% by mass) of fatty acids having a carbon number of } n \text{ based on 100\% by mass of the constituent fatty acids)} \times n \text{ (carbon number)}/100 \quad (D)$$

The glycerol fatty acid triester is preferably liquid at room temperature (25°C). The melting point of the glycerol fatty acid triester is preferably 20°C or lower, more preferably 17°C or lower, still more preferably 0°C or lower, particularly preferably -5°C or lower, most preferably -8°C or lower.

The lower limit is preferably, but not limited to, - 100°C or higher, more preferably -90°C or higher.

Here, the melting point of the glycerol fatty acid triester can be measured by differential scanning calorimetry (DSC).

The iodine number of the glycerol fatty acid triester is preferably 60 or more, more preferably 70 or more, still more preferably 80 or more, particularly preferably 100 or more, most preferably 120 or more. The iodine number is also preferably 160 or less, more preferably 150 or less, still more preferably 135 or less, particularly preferably 132 or less.

As used herein, the iodine number refers to the amount of halogen, calculated as the number of grams of iodine, bonded when a halogen is reacted with 100 g of the glycerol fatty acid triester, and is measured by potentiometric titration (JIS K 0070).

Examples of the glycerol fatty acid triester of plant origin include those derived from soybean oil, sesame oil, rice oil, safflower oil, corn oil, olive oil, or rapeseed oil. Among these, soybean oil, sesame oil, rice oil, and rapeseed oil are preferred, with soybean oil, sesame oil, or rice oil being more preferred, with soybean oil being still more preferred, because they are inexpensive, available in bulk, and highly effective in improving performance.

Here, the composition of the fatty acids can be determined by gas-liquid chromatography (GLC).

Also suitable as the oil are saponified products of glycerol fatty acid triesters of plant origin (vegetable oils) (saponified products of vegetable oils). The saponification can be carried out by adding an alkali to the vegetable oil and allowing the mixture to stand still at a predetermined temperature for a certain period of time. Here, stirring or the like may be performed, if necessary.

Examples of alkalis that can be used in the saponification include sodium hydroxide, potassium hydroxide, calcium hydroxide, and amine compounds. From the standpoint of the effect of saponification, sodium hydroxide or potassium hydroxide is particularly preferred.

The amount of alkali added per 100 parts by mass of the vegetable oil is not limited, but for example the lower limit is preferably 0.1 parts by mass or more, more preferably 0.3 parts by mass or more, still more preferably 1 part by mass or more. Moreover, the upper limit is preferably 20 parts by mass or less, more preferably 15 parts by mass or less, still more preferably 10 parts by mass or less.

The temperature for the saponification can be appropriately set within a range that allows the saponification with an alkali to proceed at a sufficient reaction rate, or within a range that does not cause alteration of the vegetable oil. Usually, the temperature is preferably 20 to 70°C, more preferably 30 to 70°C. Moreover, the time of the saponification performed by allowing the vegetable oil to stand still is preferably 30 minutes to 48 hours, more preferably 1 to 24 hours, in view of both sufficient saponification and improvement in productivity, although it depends on the temperature of the saponification.

Examples of commercially available oils, glycerol fatty acid triesters, and the like include those of Idemitsu Kosan Co., Ltd., Sankyo Yuka Kogyo K.K., Japan Energy Corporation, Olisoy, H&R, Hokoku Corporation, Showa Shell Sekiyu K.K., Fuji Kosan Co., Ltd., The Nisshin Oillio Group, Ltd., J-Oil Mills, Inc., Showa Sangyo Co., Ltd., Fuji Oil Co., Ltd., Miyoshi Oil & Fat Co., Ltd., and Boso oil and fat Co., Ltd.

Moreover, the prepared polymer composition preferably contains 0.5 to 30 parts by mass of the oil(s) per 100 parts by mass of the polymer(s) from the standpoints of physical properties including viscoelastic properties (E*, tan $\delta$), durability, impact resistance, and microfibrillated plant fiber orientation and dispersion, and other properties. The lower limit of the amount is more preferably 1 part by mass or more, still more preferably 3 parts by mass or more, particularly preferably 4 parts by mass or more, most preferably 5 parts by mass or more, further most preferably 10 parts by mass or more. The upper limit is more preferably 25 parts by mass or less, still more preferably 20 parts by mass or less, particularly preferably 15 parts by mass or less, most preferably 12.5 parts by mass or less.

(Organic acid amine)

When the organic acid amine is added to the microfibrillated plant fiber and the oil, the hydrophilic and hydrophobic sides of the organic acid amine become compatible with the microfibrillated plant fiber and the oil, respectively. Then, when the liquid mixture of these components is incorporated with the polymer such as rubber or resin, since the oil used does not affect the polymer, the oil is dispersed in the polymer, and at the same time dispersion and orientation effects are provided on the microfibrillated plant fiber. Thus, the physical properties of the composition and the orientation can be improved.

The organic acid amine (organic acid amine salt) includes an organic acid and an amine. Examples of the amine constituting the organic acid amine include primary or secondary amines containing one or two hydrogen atoms bound to the nitrogen atom. The amine may be either a monoamine or a polyamine. The amine (amine compound) suitably has 1 to 24 carbon atoms.

Examples of the amine include methylamine, ethylamine, propylamine, butylamine, pentylamine, hexylamine, heptylamine, octylamine, nonylamine, decylamine, undecylamine, dodecylamine, tridecylamine, tetradecylamine, pentadecylamine, hexadecylamine, heptadecylamine, octadecylamine, cyclopentylamine, cyclohexylamine, and cycloheptylamine. The amine may be an alkylenediamine, and specific examples include methylenediamine, ethylenediamine, propylenediamine, butylenediamine, pentylenediamine, and hexamethylenediamine. The amine may also be a polyalkylene polyamine, and specific examples include diethylenetriamine, triethylenetetramine, tetraethylenepentamine, pentaethylenehexamine, dipropylenetriamine, dibutylenetriamine, tributylenetetramine, and tetrapropylenepentamine.

Examples of the organic acid constituting the organic acid amine include aliphatic carboxylic acids, alicyclic carboxylic acids, and aromatic carboxylic acids. These carboxylic acids may be any monocarboxylic, dicarboxylic or other polycarboxylic, or other carboxylic acid, and may be either saturated or unsaturated carboxylic acids. Other examples of the organic acid include aliphatic sulfonic acids, aromatic sulfonic acids, alkylsalicylic acids, and alkylphenol compounds.

Suitable examples of the aliphatic carboxylic acids include monocarboxylic acids and dicarboxylic acids. The aliphatic carboxylic acids preferably have 4 to 30, more preferably 6 to 24 carbon atoms. Specific examples include alkanoic acids such as hexanoic acid, heptanoic acid, octanoic acid, nonanoic acid, decanoic acid, undecanoic acid, dodecanoic acid, tridecanoic acid, tetradecanoic acid, pentadecanoic acid, hexadecanoic acid, heptadecanoic acid, octadecanoic acid, nonadecanoic acid, eicosanoic acid, and docosanoic acid (behenic acid), and branched alkanoic acids thereof (2-methylpentanoic acid, 2-ethylhexanoic acid, 4-propylpentanoic acid, 2-methyldecanoic acid, 3-methylhendecanoic acid, 2-methyldodecanoic acid, 2-methyltridecanoic acid, 2-methyltetradecanoic acid, 2-ethyltetradecanoic acid, 2-propyldecanoic acid, 2-ethylhexadecanoic acid, 2-methyloctadecanoic acid); hexenoic acid, octenoic acid, decenoic acid, dodecenoic acid, tetradecenoic acid, hexadecenoic acid, octadecenoic acid, eicosenoic acid, docosenoic acid, octadecatrienoic acid, hexanedioic acid, heptanedioic acid, octanedioic acid, nonanedioic acid, decanedioic acid, undecanedioic acid, dodecanedioic acid, tridecanedioic acid, tetradecanedioic acid, pentadecanedioic acid, hexadecanedioic acid, heptadecanedioic acid, octadecanedioic acid, nonadecanedioic acid, eicosanedioic acid, docosanedioic acid, and other dicarboxylic acids.

Examples of the alicyclic carboxylic acids include cyclohexane monocarboxylic acids and cyclohexane dicarboxylic acids.

Examples of the aromatic carboxylic acids include carboxylic acids having a carboxy group directly attached to an aromatic ring and carboxylic acids having a carboxy group in a side chain. The aromatic hydrocarbon groups of the aromatic carboxylic acids may be either monocyclic or polycyclic condensed rings, and examples include benzene, naphthalene, anthracene, phenanthrene, indene, fluorene, and biphenyl. The aromatic carboxylic acids may be monocarboxylic, dicarboxylic, or other polycarboxylic acids. Specific examples of the aromatic carboxylic acids include benzoic acid, phthalic acid, phenylacetic acid, and mandelic acid, and derivatives thereof.

The aliphatic sulfonic acids and the aromatic sulfonic acids are compounds including an aliphatic or aromatic hydrocarbon group and a sulfonic acid group as represented by $RSO_3H$ and $(R')_nArSO_3H$, respectively. R and R' each represent an aliphatic hydrocarbon group, and Ar represents an aromatic hydrocarbon group. Examples of the aliphatic sulfonic acids include those having a C4-C40 acyclic hydrocarbon group. Examples of the aromatic sulfonic acids include those substituted with one or two or more acyclic hydrocarbon groups. The acyclic hydrocarbon group is preferably a C4-C40 alkyl group (especially an alkyl group having 12 or more carbon atoms), and specific examples include dodecyl, tridecyl, tetradecyl, pentadecyl, hexadecyl, heptadecyl, octadecyl, nonadecyl, eicosyl, tetraxyl, pentacosyl, hexacosyl, heptacosyl, octacosyl, nonacosyl, triacontyl, pentatriacontyl, and octatriacontyl groups. The aromatic hydrocarbon group may be either a monocyclic or polycyclic condensed ring, as described for the aromatic carboxylic acids; similarly, examples include benzene and naphthalene.

Moreover, from the standpoints of physical properties including viscoelastic properties (E*, tan δ), durability, and impact resistance, microfibrillated plant fiber orientation and dispersion, and other properties, the prepared polymer composition preferably contains 0.1 to 50 parts by mass of the organic acid amine(s) per 100 parts by mass of the microfibrillated plant fiber(s). The lower limit of the amount is more preferably 5 parts by mass or more, still more preferably 10 parts by mass or more, particularly preferably 15 parts by mass or more, most preferably 20 parts by mass or more. The upper limit is more preferably 45 parts by mass or less, still more preferably 40 parts by mass or less.

In the preparation of the liquid mixture containing the microfibrillated plant fiber, the oil, and the organic acid amine in step 1, an aqueous solution of the microfibrillated plant fiber dispersed in water (microfibrillated plant fiber aqueous solution) may be mixed with the oil and the organic acid amine; or the solvent of the microfibrillated plant fiber aqueous solution may be substituted with ethanol or other solvent, followed by mixing with the oil and the organic acid amine; or the microfibrillated plant fiber as it is may be mixed with the oil and the organic acid amine. Moreover, when the microfibrillated plant fiber aqueous solution is mixed with the oil and the organic acid amine, water may then be removed, if necessary, for example, by adding a strong acid such as hydrochloric acid or sulfuric acid to the mixture and heating it at, for example, 120 to 200°C, preferably 140 to 180°C, for azeotropic distillation.

The microfibrillated plant fiber aqueous solution can be prepared by known methods. For example, it may be prepared by dispersing the microfibrillated plant fiber in water using a high-speed homogenizer, an ultrasonic homogenizer, a colloid mill, a blender mill, or other device. The temperature and time of the preparation can also be appropriately set so that the microfibrillated plant fiber is sufficiently dispersed in water.

The amount of the microfibrillated plant fiber (solids) in the microfibrillated plant fiber aqueous solution is preferably 0.2 to 20% by mass, more preferably 0.5 to 10% by mass, still more preferably 0.5 to 3% by mass.

Step 2 of preparing a polymer composition containing the liquid mixture obtained in step 1 and the polymer can be carried out by mixing at least the liquid mixture and the polymer. The liquid mixture may be mixed with the polymer and other components after water is optionally removed, for example, by adding a strong acid such as hydrochloric acid or sulfuric acid to the liquid mixture and heating it at, for example, 120 to 200°C, preferably 140 to 180°C, for azeotropic distillation. The mixing can be carried out by known mixing methods, such as by kneading the components using a rubber kneading machine such as an open roll mill or a Banbury mixer or by kneading the components using an extruder (e.g., twin screw extruder). Then, the liquid mixture containing the microfibrillated plant fiber, the oil, and the like, the polymer, and optional other components may be mixed to prepare the above-described polymer composition.

In particular, the polymer composition is preferably prepared by a method including: step 1 of preparing a liquid mixture containing the microfibrillated plant fiber, at least one of glycerol fatty acid triesters of plant origin (vegetable oils) and/or saponified products of glycerol fatty acid triesters of plant origin (vegetable oils) (saponified products of vegetable oils) as the oil, and at least one selected from the group consisting of aliphatic carboxylic acids, alicyclic carboxylic acids, and aromatic carboxylic acids as the organic acid amine; and step 2 of producing a polymer composition containing the liquid mixture and the polymer. More preferably, the polymer composition is prepared by a method including: step 1 of preparing a liquid mixture containing the microfibrillated plant fiber, at least one of glycerol fatty acid triesters of plant origin (vegetable oils) and/or saponified products of glycerol fatty acid triesters of plant origin (vegetable oils) (saponified products of vegetable oils) as the oil, and at least one aliphatic carboxylic acid as the organic acid amine; and step 2 of preparing a polymer composition containing the liquid mixture and at least one rubber selected from the group consisting of NR, BR, and SBR as the polymer.

(Other components)

Moreover, the polymer composition may contain an additional filler other than the microfibrillated plant fiber. Examples of the additional filler include carbon black, silica, calcium carbonate, talc, alumina, clay, aluminum hydroxide, aluminum oxide, and mica. For use in a tire, carbon black or silica is preferred.

Non-limiting examples of the carbon black include N134, N110, N220, N234, N219, N339, N330, N326, N351, N550, and N762. Usable commercial products are available from Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon, etc. These may be used alone or in combinations of two or more.

The amount of carbon black, if present, per 100 parts by mass of the polymers is preferably 5 parts by mass or more, more preferably 15 parts by mass or more, still more preferably 25 parts by mass or more, particularly preferably 30 parts by mass or more. When the amount is not less than the lower limit, good properties such as abrasion resistance and grip performance tend to be obtained. The amount is also preferably 100 parts by mass or less, more preferably 50 parts by mass or less. When the amount is not more than the upper limit, the polymer composition tends to provide good processability.

The nitrogen adsorption specific surface area ($N_2SA$) of the carbon black is preferably 10 m²/g or more, more preferably 30 m²/g or more, still more preferably 35 m²/g or more, further preferably 40 m²/g or more. When the $N_2SA$ is not less than the lower limit, good abrasion resistance and grip performance tend to be obtained. The $N_2SA$ is also preferably 200 m²/g or less, more preferably 150 m²/g or less, still more preferably 130 m²/g or less. When the $N_2SA$ is not more than the upper limit, the carbon black tends to exhibit good dispersion.

Here, the nitrogen adsorption specific surface area of the carbon black is determined in accordance with JIS K 6217-2:2001.

Examples of the silica include dry silica (anhydrous silica) and wet silica (hydrous silica). Wet silica is preferred among these because it contains a large number of silanol groups. Usable commercial products are available from Degussa, Rhodia, Tosoh Silica Corporation, Solvay Japan, Tokuyama Corporation, etc. These may be used alone or in combinations of two or more.

The amount of silica, if present, per 100 parts by mass of the polymers is preferably 25 parts by mass or more, more preferably 30 parts by mass or more, still more preferably 50 parts by mass or more. When the amount is not less than the lower limit, good wet grip performance and handling stability tend to be obtained. The upper limit of the amount is preferably, but not limited to, 300 parts by mass or less, more preferably 200 parts by mass or less, still more preferably 170 parts by mass or less, particularly preferably 100 parts by mass or less, most preferably 80 parts by mass or less. When the amount is not more than the upper limit, good dispersion tends to be obtained.

The nitrogen adsorption specific surface area ($N_2SA$) of the silica is preferably 70 $m^2/g$ or more, more preferably 140 $m^2/g$ or more, still more preferably 160 $m^2/g$ or more. When the $N_2SA$ is not less than the lower limit, good wet grip performance and tensile strength at break tend to be obtained. Moreover, the upper limit of the $N_2SA$ of the silica is preferably, but not limited to, 500 $m^2/g$ or less, more preferably 300 $m^2/g$ or less, still more preferably 250 $m^2/g$ or less. When the $N_2SA$ is not more than the upper limit, good dispersion tends to be obtained.

Here, the $N_2SA$ of the silica is determined by a BET method in accordance with ASTM D3037-93.

The polymer composition containing silica preferably further contains a silane coupling agent. Non-limiting examples of the silane coupling agent include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 2-triethoxysilylethyl-N,N-dimethylthiocarbamoyltetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Usable commercial products are available from Degussa, Momentive, Shin-Etsu Silicone, Tokyo Chemical Industry Co., Ltd., AZmax.Co., Dow Corning Toray Co., Ltd., etc. These may be used alone or in combinations of two or more.

The amount of silane coupling agents per 100 parts by mass of the silica is preferably 3 parts by mass or more, more preferably 6 parts by mass or more. When the amount is 3 parts by mass or more, good properties such as tensile strength at break tend to be obtained. The amount is also preferably 20 parts by mass or less, more preferably 15 parts by mass or less. When the amount is 20 parts by mass or less, an effect commensurate with the amount tends to be obtained.

The polymer composition may contain a solid resin (a polymer that is solid at room temperature (25°C)).

The amount of solid resins, if present, per 100 parts by mass of the polymers is preferably 1 part by mass or more, more preferably 3 parts by mass or more, still more preferably 5 parts by mass or more. The amount is also preferably 50 parts by mass or less, more preferably 30 parts by mass or less, still more preferably 20 parts by mass or less. When the amount is within the range indicated above, good wet grip performance tends to be obtained.

Non-limiting examples of the solid resins include solid styrene resins, coumarone-indene resins, terpene resins, p-t-butylphenol acetylene resins, acrylic resins, dicyclopentadiene resins (DCPD resins), C5 petroleum resins, C9 petroleum resins, and C5/C9 petroleum resins. These may be used alone or in combinations of two or more.

Solid styrene resins refer to solid polymers produced from styrenic monomers as structural monomers, and examples include polymers polymerized from styrenic monomers as main components (at least 50% by mass). Specific examples include homopolymers polymerized from single styrenic monomers (e.g., styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, p-chlorostyrene); copolymers copolymerized from two or more styrenic monomers; and copolymers of styrenic monomers and additional monomers copolymerizable therewith.

Examples of the additional monomers include acrylonitriles such as acrylonitrile and methacrylonitrile; unsaturated carboxylic acids such as acrylic and methacrylic acid; unsaturated carboxylic acid esters such as methyl acrylate and methyl methacrylate; dienes such as chloroprene, butadiene, and isoprene; olefins such as 1-butene and 1-pentene; and α,β-unsaturated carboxylic acids and acid anhydrides thereof such as maleic anhydride.

In particular, solid α-methylstyrene resins (e.g., α-methylstyrene homopolymers, copolymers of α-methylstyrene and styrene) are preferred.

Solid coumarone-indene resins refer to resins that contain coumarone and indene as the main monomer components forming the skeleton (backbone) of the resins. Examples of monomer components other than coumarone and indene which may be contained in the skeleton include styrene, α-methylstyrene, methylindene, and vinyltoluene.

Examples of solid terpene resins include polyterpene, terpene phenol, and aromatic modified terpene resins.

Polyterpene resins refer to resins produced by polymerization of terpene compounds, or hydrogenated products of the resins. Terpene compounds refer to hydrocarbons represented by the composition formula: $(C_5H_8)_n$ or oxygen-

containing derivatives thereof, each of which has a terpene backbone and is classified as a monoterpene ($C_{10}H_{16}$), sesquiterpene ($C_{15}H_{24}$), diterpene ($C_{20}H_{32}$), or other terpenes. Examples of the terpene compounds include α-pinene, β-pinene, dipentene, limonene, myrcene, alloocimene, ocimene, α-phellandrene, α-terpinene, γ-terpinene, terpinolene, 1,8-cineole, 1,4-cineole, α-terpineol, β-terpineol, and γ-terpineol.

Examples of the solid polyterpene resins include solid terpene resins made from the aforementioned terpene compounds, such as α-pinene resins, β-pinene resins, limonene resins, dipentene resins, and β-pinene-limonene resins, and solid hydrogenated terpene resins produced by hydrogenation of these terpene resins.

Examples of the solid terpene phenol resins include solid resins copolymerized from the aforementioned terpene compounds and phenolic compounds, and solid resins produced by hydrogenation of these resins. Specific examples include solid resins produced by condensation of the aforementioned terpene compounds, phenolic compounds, and formaldehyde. Here, examples of the phenolic compounds include phenol, bisphenol A, cresol, and xylenol.

Examples of the solid aromatic modified terpene resins include solid resins obtained by modification of terpene resins with aromatic compounds, and solid resins produced by hydrogenation of these resins. Here, the aromatic compounds may be any compound having an aromatic ring, and examples include phenol compounds such as phenol, alkylphenols, alkoxyphenols, and unsaturated hydrocarbon group-containing phenols; naphthol compounds such as naphthol, alkylnaphthols, alkoxynaphthols, and unsaturated hydrocarbon group-containing naphthols; styrene and styrene derivatives such as alkylstyrenes, alkoxystyrenes, and unsaturated hydrocarbon group-containing styrenes; and coumarone and indene.

Examples of solid p-t-butylphenol acetylene resins include solid resins produced by condensation of p-t-butylphenol and acetylene.

Any solid acrylic resin may be used, but solvent-free solid acrylic resins are suitable because they contain little impurities to provide resins with a sharp molecular weight distribution.

Examples of the solvent-free solid acrylic resins include (meth)acrylic resins (polymers) synthesized by high temperature continuous polymerization (high temperature continuous bulk polymerization as described in, for example, US Patent No. 4,414,370, JP S59-6207 A, JP H5-58005 B, JP H1-313522 A, US Patent No. 5,010,166, and annual research report TREND 2000 issued by Toagosei Co., Ltd., vol. 3, pp. 42-45) using no or minimal amounts of auxiliary raw materials such as polymerization initiators, chain transfer agents, and organic solvents. As used herein, the term "(meth)acrylic" means methacrylic and acrylic.

Preferred are solid acrylic resins that are substantially free of auxiliary raw materials such as polymerization initiators, chain transfer agents, and organic solvents. Also preferred are acrylic resins having a relatively narrow composition distribution or molecular weight distribution, produced by continuous polymerization.

As described above, solid acrylic resins which are substantially free of auxiliary raw materials such as polymerization initiators, chain transfer agents, and organic solvents, namely which are of high purity, are preferred. The purity of the solid acrylic resins (the resin content of the resins) is preferably 95% by mass or more, more preferably 97% by mass or more.

Examples of the monomer components constituting the solid acrylic resins include (meth)acrylic acids and (meth)acrylic acid derivatives such as (meth)acrylic acid esters (e.g., alkyl esters, aryl esters, aralkyl esters), (meth)acrylamides, and (meth)acrylamide derivatives.

In addition to the (meth)acrylic acids or (meth)acrylic acid derivatives, aromatic vinyls such as styrene, α-methylstyrene, vinyltoluene, vinylnaphthalene, divinylbenzene, trivinylbenzene, or divinylnaphthalene may also be used as the monomer components constituting the solid acrylic resins.

The solid acrylic resins may consist only of (meth)acrylic components or may further have constituent elements other than (meth)acrylic components.

Moreover, the solid acrylic resins may contain a hydroxy group, a carboxy group, a silanol group, or other groups.

The solid resins may be commercially available from, for example, Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., JXTG Nippon Oil & Energy Corporation, Arakawa Chemical Industries, Ltd., Taoka Chemical Co., Ltd., etc.

From the standpoints of crack resistance, ozone resistance, and other properties, the polymer composition preferably contains an antioxidant.

Non-limiting examples of the antioxidant include naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as polymerized 2,2,4-trimethyl-1,2-dihydroquinoline; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. Preferred among these are p-phenylenediamine or quinoline antioxidants, with N-(1,3-dimethylbutyl)-N'-phenyl-p-phenylenediamine or polymerized 2,2,4-trimethyl-1,2-dihydroquinoline being more preferred. Usable commercial products are available from, for example, Seiko Chemical Co., Ltd., Sumitomo Chemical Co., Ltd., Ouchi Shinko Chemical Industrial Co., Ltd., Flexsys, etc.

The amount of antioxidants per 100 parts by mass of the polymers is preferably 0.2 parts by mass or more, more preferably 0.5 parts by mass or more. When the amount is not less than the lower limit, sufficient ozone resistance tends to be obtained. The amount is preferably 7.0 parts by mass or less, more preferably 4.0 parts by mass or less. When the amount is not more than the upper limit, a good appearance tends to be obtained.

The polymer composition preferably contains stearic acid. From the standpoint of the balance between the above-mentioned properties, the amount of stearic acid per 100 parts by mass of the polymers is preferably 0.5 to 10 parts by mass, more preferably 0.5 to 5 parts by mass.

Here, the stearic acid used may be a conventional one, e.g., available from NOF Corporation, Kao Corporation, FUJIFILM Wako Pure Chemical Corporation, or Chiba Fatty Acid Co., Ltd.

The polymer composition preferably contains zinc oxide. From the standpoint of the balance between the above-mentioned properties, the amount of zinc oxide per 100 parts by mass of the polymers is preferably 0.5 to 10 parts by mass, more preferably 1 to 5 parts by mass.

Here, the zinc oxide used may be a conventional one, e.g., available from Mitsui Mining & Smelting Co., Ltd., Toho Zinc Co., Ltd., HakusuiTech Co., Ltd., Seido Chemical Industry Co., Ltd., or Sakai Chemical Industry Co., Ltd.

The polymer composition may contain a wax. Non-limiting examples of the wax include petroleum waxes, natural waxes, and synthetic waxes produced by purifying or chemically treating a plurality of waxes. These waxes may be used alone or in combinations of two or more.

Examples of the petroleum waxes include paraffin waxes and microcrystalline waxes. The natural waxes may be any wax derived from non-petroleum resources, and examples include plant waxes such as candelilla wax, carnauba wax, Japan wax, rice wax, and jojoba wax; animal waxes such as beeswax, lanolin, and spermaceti; mineral waxes such as ozokerite, ceresin, and petrolatum; and purified products of the foregoing waxes. Usable commercial products are available from, for example, Ouchi Shinko Chemical Industrial Co., Ltd., Nippon Seiro Co., Ltd., Seiko Chemical Co., Ltd., etc. Here, the amount of waxes may be selected appropriately in view of ozone resistance and cost.

When the polymer composition is a rubber composition, it preferably contains sulfur in order to moderately crosslink the polymer chains and provide good rubber physical properties.

The amount of sulfur per 100 parts by mass of the polymers is preferably 0.1 parts by mass or more, more preferably 0.5 parts by mass or more, still more preferably 0.7 parts by mass or more. The amount is preferably 6.0 parts by mass or less, more preferably 4.0 parts by mass or less, still more preferably 3.0 parts by mass or less. When the amount is within the range indicated above, a good balance between the above-mentioned properties tends to be obtained.

Examples of the sulfur include those used commonly in the rubber industry, such as powdered sulfur, precipitated sulfur, colloidal sulfur, insoluble sulfur, highly dispersible sulfur, and soluble sulfur. Usable commercial products are available from Tsurumi Chemical Industry Co., Ltd., Karuizawa Sulfur Co., Ltd., Shikoku Chemicals Corporation, Flexsys, Nippon Kanryu Industry Co., Ltd., Hosoi Chemical Industry Co., Ltd., etc. These may be used alone or in combinations of two or more.

When the polymer composition is a rubber composition, it preferably contains a vulcanization accelerator.

The amount of vulcanization accelerators is not limited and may be arbitrarily selected according to the desired cure rate or crosslink density, but the amount is usually 0.3 to 10 parts by mass, preferably 0.5 to 7 parts by mass per 100 parts by mass of the polymers.

Any type of vulcanization accelerator may be used including usually used ones. Examples of vulcanization accelerators include thiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolyl sulfenamide, N-oxyethylene-2-benzothiazole sulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These may be used alone or in combinations of two or more. Preferred among these are sulfenamide or guanidine vulcanization accelerators.

In addition to the above-mentioned components, the polymer composition may appropriately contain usual additives used in application fields, such as a release agent or a pigment.

When the polymer composition is a rubber composition, it can be prepared by known methods, such as by kneading the above components using a rubber kneading machine such as an open roll mill or a Banbury mixer, followed by vulcanizing the kneaded mixture.

The kneading conditions are as follows. In a base kneading step that includes kneading additives other than vulcanizing agents and vulcanization accelerators, the kneading temperature is usually 50 to 200°C, preferably 80 to 190°C, and the kneading time is usually 30 seconds to 30 minutes, preferably one minute to 30 minutes. In a final kneading step that includes kneading a vulcanizing agent and/or a vulcanization accelerator, the kneading temperature is usually 100°C or lower, preferably from room temperature to 80°C. Then, the composition obtained after kneading the vulcanizing agent and/or vulcanization accelerator is usually vulcanized by, for example, press vulcanization. The vulcanization temperature is usually 120 to 200°C, preferably 140 to 180°C.

When the polymer composition is a resin composition, it can be prepared by known methods, such as by kneading and forming the above components using an extruder (e.g., twin screw extruder).

As described above, since the polymer composition is resistant to impact and vibration in the direction perpendicular to the orientation direction, it can be applied to various applications, including components that are long in one direction, such as automobile bodies, aircraft wings, windmills for wind power generation, and sports tools such as golf clubs. The polymer composition can also be suitably applied to ring-shaped components such as tires, which can be considered as components that are long in one direction (circumferential direction).

When the polymer composition is applied to a tire, the tire can be produced from the polymer composition by usual techniques. Specifically, an unvulcanized polymer composition into which materials are compounded as needed may be extruded into the shape of a tire component and then assembled with other tire components in a usual manner on a tire building machine to build an unvulcanized tire, which may then be heated and pressurized in a vulcanizer to produce a tire (e.g., pneumatic tire).

When the polymer composition is used in a tire, it can be applied to various tire components such as treads (cap treads), base treads, undertreads, sidewalls, clinch apexes, bead apexes, breaker cushion rubbers, carcass cord topping rubbers, insulations, chafers, and innerliners, as well as side reinforcing layers of run-flat tires. The polymer composition which has excellent properties such as impact resistance and durability can be suitably applied to tire components such as treads and sidewalls, among others.

The pneumatic tire may be suitably used as a tire for passenger vehicles, large passenger vehicles, large SUVs, heavy duty vehicles such as trucks and buses, light trucks, or motorcycles, or as a run-flat tire or a racing tire. It is more suitable as a tire for passenger vehicles, among others.

EXAMPLES

The present disclosure is specifically described referring to examples, but is not limited to these examples.

The chemicals used in the examples and comparative examples are listed below.

Microfibrillated plant fiber: biomass nanofiber (trade name "BiNFi-s cellulose", solids: 2% by mass, moisture: 98% by mass, average fiber diameter: 10 to 50 nm, average fiber length: 2 to 5 $\mu$m) available from Sugino Machine Limited

Oil: soybean oil available from The Nisshin OilliO Group, Ltd. (The properties are shown in Table 1. Please note that the amounts of the respective fatty acids in Table 1 mean the amounts (% by mass) of the respective fatty acids each based on 100% by mass of the constituent fatty acids.)
Organic acid amine 1: carboxylic acid amine salt (FX600 available from Elementis)
Organic acid amine 2: fatty acid amine salt (Cheleslight WR-6 available from Chelest Corporation)
NR latex: field latex available from Muhibbah LATEKS
SBR latex: LX110 (E-SBR, vinyl content: 18% by mass, styrene content: 37.5% by mass, concentration of rubber component in rubber latex: 40.5% by mass) available from Zeon Corporation
NR: TSR20
SBR: commercial product of Zeon Corporation (S-SBR, styrene content: 41% by mass)
Carbon black: DIABLACK N550 ($N_2SA$: 41 m$^2$/g) available from Mitsubishi Chemical Corporation
Antioxidant: Nocrac 6C available from Ouchi Shinko Chemical Industrial Co., Ltd.
Zinc oxide: zinc oxide #2 available from Mitsui Mining & Smelting Co., Ltd.
Stearic acid: TSUBAKI available from NOF Corporation
Sulfur: Seimi Sulfur available from Nippon Kanryu Industry Co., Ltd.
Vulcanization accelerator: NOCCELER NS available from Ouchi Shinko Chemical Industrial Co., Ltd.
Thermoplastic resin: Hybrar 7311F (resin name, etc.) available from KURARAY Co., Ltd.

[Table 1]

| Composition and physical properties of oil | |
| --- | --- |
| Amount of fatty acids having one unsaturated bond | 23 |
| Amount of fatty acids having two unsaturated bonds | 54 |
| Amount of fatty acids having three unsaturated bonds | 10 |

(continued)

| Composition and physical properties of oil | |
|---|---|
| Amount of fatty acids having two or more unsaturated bonds | 64 |
| Amount of fatty acids having unsaturated bond(s) | 87 |
| Amount of saturated fatty acids | 13 |
| Value of relationship (A) | 161 |
| Average carbon number of constituent fatty acids | 17.8 |
| Melting point (°C) | -8 |
| Iodine number | 132 |

<Preparation of liquid mixture>

Pure water in an amount of 1000 g was added to 500 g of the microfibrillated plant fiber to prepare a 0.5% by mass (solids concentration) suspension of the microfibrillated plant fiber, which was then stirred with a high-speed homogenizer ("T50" available from IKA Japan, rotation speed: 8000 rpm) for about five minutes to prepare a uniform aqueous dispersion.

According to the formulation in Table 2, the oil, the prepared aqueous dispersion (calculated as dry mass of microfibrillated plant fiber (solids)), and the organic acid amine 1 or 2 were mixed, and then toluene was added in an amount of 100 parts by mass per 100 parts by mass of the oil, and they were mixed. To the mixture was added a small amount of hydrochloric acid, and the mixture was heated to 80°C for azeotropic distillation to remove water. The mixture after the removal of water was stirred and mixed at 50°C for five minutes using a high-speed homogenizer ("T50" available from IKA Japan, rotation speed: 8000 rpm). Thus, liquid mixtures 1 to 3 were prepared.

[Table 2]

| | Liquid mixture | | |
|---|---|---|---|
| | 1 | 2 | 3 |
| Oil | 10 | 10 | 12.5 |
| Microfibrillated plant fiber (Solids) | 10 | 10 | 12.5 |
| Organic acid amine 1 (Carboxylic acid amine salt) | 2 | | |
| Organic acid amine 2 (Fatty acid amine salt) | | 2 | 5 |

<Preparation of rubber-microfibrillated plant fiber composite (wet masterbatch)>

Rubber-microfibrillated plant fiber composites were produced according to the formulation in Table 3.

Specifically, the prepared aqueous dispersion (aqueous dispersion of microfibrillated plant fiber) and the NR latex (calculated as rubber (solids)) or SBR latex (calculated as rubber (solids)) were stirred at room temperature for five minutes using a high-speed homogenizer to obtain a compounded latex having a pH of 10.2. Thereto was added a 2% by mass formic acid aqueous solution at room temperature to adjust the pH to 3 to 4 to form a coagulum. The coagulum was filtered and dried. Thus, rubber-microfibrillated plant fiber composites (WB 1 and WB 2) were prepared.

[Table 3]

| Rubber-microfibrillated plant fiber composite (Wet masterbatch) | | |
|---|---|---|
| | WB 1 | WB 2 |
| NR latex (Solids) | 100 | |
| SBR latex (Solids) | | 100 |
| Microfibrillated plant fiber (Solids) | 10 | 10 |
| Unit: parts by mass | | |

(Examples and Comparative Examples)

<Preparation of rubber sample>

According to the formulation shown in Table 4 or 5, the materials other than the sulfur and vulcanization accelerator were kneaded at 150°C for four minutes using a 1.7 L Banbury mixer. Then, the kneaded mixture was kneaded with the sulfur and vulcanization accelerator using an open roll mill at 80°C for four minutes to give an unvulcanized rubber composition. The unvulcanized rubber composition was press-formed (vulcanized) at 170°C for 20 minutes to prepare a rubber sample (vulcanized rubber composition).

<Preparation of resin composition>

According to the formulation shown in Table 6, the materials were kneaded and formed using a twin screw extruder to obtain a resin composition (specimen).

<Evaluation items and testing methods>

Specimens (vulcanized rubber compositions) taken from the rubber samples prepared in "Preparation of rubber sample" and specimens taken from the resin compositions prepared in "Preparation of resin composition" were subjected to the physical property measurements and evaluation below. The results are shown in Tables 4 to 6. Comparative Examples 1-1, 2-1, and 3-1 are used as standard comparative examples in Tables 4, 5, and 6, respectively.

(Viscoelastic testing)

The specimens (dimensions: 20 mm in length, 3 mm in width, 2 mm in thickness) taken in the extrusion direction and in a direction orthogonal to the extrusion direction were measured for the complex modulus $E^*a$ (MPa) in the extrusion direction and the complex modulus $E^*b$ (MPa) in the direction orthogonal to the extrusion direction using EPLEXOR available from GABO at a temperature of 70°C, a frequency of 10 Hz, an initial strain of 10%, and a dynamic strain of 1%.

(Tensile testing)

The No. 7 dumbbell specimens were subjected to tensile testing in accordance with JIS K 6251:2017 "Rubber, vulcanized or thermoplastic -- Determination of tensile stress-strain properties" (standard test temperature: 23 ± 2°C) to measure the stress at break TBa (MPa) during stretching in the extrusion direction and the stress FBa (MPa) at elongation of 50% of the elongation at break during stretching in the extrusion direction.

(Impact resistance (Impact strength/Izod impact testing))

The rubber samples (specimens) and resin compositions (specimens) were subjected to Izod impact testing using an Izod impact tester (Toyo Seiki Seisaku-sho, Ltd.) (the impact was applied in the direction perpendicular to the orientation direction of the microfibrillated plant fiber (the direction orthogonal to the extrusion direction)). A notch with a depth of 2 mm was inserted in the center of each specimen. In the 5.5 J-R test, a 5.5 J hammer was used to impact the side opposite to the notch to cause crack propagation from the unnotched surface of the formed article, and then the impact strength was calculated. The impact strength of each specimen is expressed as an index relative to that of the standard comparative example taken as 100. A higher index indicates higher impact resistance (impact strength).

(Fuel economy)

The loss tangent (tan δ) of the rubber samples (vulcanized rubber compositions) was measured using EPLEXOR available from GABO at a temperature of 70°C, a frequency of 10 Hz, an initial strain of 10%, and a dynamic strain of 1%, and expressed as an index relative to that of the standard comparative example taken as 100 (they were stretched and deformed in the orientation direction (extrusion direction) of the microfibrillated plant fiber). A higher index indicates better fuel economy.

(Flex crack growth resistance testing)

Specimens were prepared from the rubber samples (vulcanized rubber compositions) and the resin compositions and subjected to flex crack growth testing in accordance with JIS K 6260 "Rubber, vulcanized or thermoplastic - Determination of flex cracking and crack growth (De Mattia Type)" in which each rubber sheet was bent by repeating 70% elongation one million times, and then the length of the formed crack was measured (they were bent in the direction perpendicular to the orientation direction of the microfibrillated plant fiber (the direction orthogonal to the extrusion direction)). The reciprocal of the measured value (length) is expressed as an index relative to that of the standard comparative example taken as 100. A higher index indicates less crack growth and better flex crack growth resistance.

(Vibration resistance)

The vibration resistance of the rubber samples (vulcanized rubber compositions) and the resin compositions was evaluated in accordance with the central exciting method specified in 3.3 in JIS K 7391. The vibration resistance is expressed as an index relative to that of the standard comparative example taken as 100. A higher index indicates better vibration resistance.

(Flexural modulus)

The resin compositions (specimens) were held in a moisture-proof container at 23°C ± 2°C for 24 hours or longer. The specimens were taken out from the moisture-proof container, and immediately thereafter (within 15 minutes), the flexural modulus (MPa) was measured in accordance with ISO 178 (the flexural modulus was measured in the direction perpendicular to the orientation direction of the microfibrillated plant fiber (the direction orthogonal to the extrusion direction)). The measurement was carried out at a temperature of 23°C and a humidity of 50%RH. The flexural modulus of each specimen is expressed as an index relative to that of the standard comparative example taken as 100. A higher index indicates higher flexural modulus.

(Bending strength)

The bending strength (kgf/mm$^2$) of the resin compositions (specimens) was measured by a testing method in accordance with JIS Z 2248 (the bending strength was measured in the direction perpendicular to the orientation direction of the microfibrillated plant fiber (the direction orthogonal to the extrusion direction)). Specifically, a three-point bending method was employed with a span of 200 mm, two circular supports having a radius of 5 mm, and a center loading pin having a semicircular cross-section with a radius of 5 mm. The specimens were set with the reinforced surface facing downward, and the crosshead speed was 2 mm/min. The bending strength of each specimen is expressed as an index relative to that of the standard comparative example taken as 100. A higher index indicates greater bending strength.

[Table 4]

| Rubber composition (NR) | | | | |
|---|---|---|---|---|
| | Example | | | Comparative Example |
| | 1-1 | 1-2 | 1-3 | 1-1 |
| NR | 100 | 100 | 100 | |
| Rubber-microfibrillated plant fiber composite 1 (WMB 1) (Amount of microfibrillated plant fiber) | | | | 110 (10) |
| Liquid mixture 1 (Amount of microfibrillated plant fiber) | 20 (10) | | | |
| Liquid mixture 2 (Amount of microfibrillated plant fiber) | | 20 (10) | | |
| Liquid mixture 3 (Amount of microfibrillated plant fiber) | | | 25 (12.5) | |
| Carbon black | 30 | 30 | 30 | 30 |
| Oil | | | | 10 |
| Antioxidant | 2 | 2 | 2 | 2 |
| Zinc oxide | 3 | 3 | 3 | 3 |
| Stearic acid | 2 | 2 | 2 | 2 |
| Sulfur | 1.5 | 1.5 | 1.5 | 1.5 |
| Vulcanization accelerator | 1 | 1 | 1 | 1 |

(continued)

| Rubber composition (NR) | | | | |
|---|---|---|---|---|
| | Example | | | Comparative Example |
| | 1-1 | 1-2 | 1-3 | 1-1 |
| E*a/E*b | 1.3 | 1.5 | 2.0 | 1.1 |
| TBa/FBa | 2.6 | 3.1 | 3.5 | 2.2 |
| E*a [MPa] | 1.5 | 6 | 10 | 1.0 |
| TBa [MPa] | 10 | 20 | 25 | 8 |
| Impact resistance | 110 | 120 | 115 | 100 |
| Fuel economy | 120 | 130 | 125 | 100 |
| Flex crack growth resistance | 120 | 120 | 125 | 100 |
| Vibration resistance | 120 | 120 | 130 | 100 |

[Table 5]

| Rubber composition (SBR) | | | | |
|---|---|---|---|---|
| | Example | | | Comparative Example |
| | 2-1 | 2-2 | 2-3 | 2-1 |
| SBR | 100 | 100 | 100 | |
| Rubber-microfibrillated plant fiber composite 2 (WMB 2) (Amount of microfibrillated plant fiber) | | | | 110 (10) |
| Liquid mixture 1 (Amount of microfibrillated plant fiber) | 20 (10) | | | |
| Liquid mixture 2 (Amount of microfibrillated plant fiber) | | 20 (10) | | |
| Liquid mixture 3 (Amount of microfibrillated plant fiber) | | | 25 (12.5) | |
| Carbon black | 30 | 30 | 30 | 30 |
| Oil | | | | 10 |
| Antioxidant | 2 | 2 | 2 | 2 |
| Zinc oxide | 3 | 3 | 3 | 3 |
| Stearic acid | 2 | 2 | 2 | 2 |
| Sulfur | 1.5 | 1.5 | 1.5 | 1.5 |
| Vulcanization accelerator | 1 | 1 | 1 | 1 |
| E*a/E*b | 1.3 | 1.5 | 2.0 | 1.1 |
| TBa/FBa | 2.6 | 3.0 | 3.5 | 2.2 |
| E*a [MPa] | 1.5 | 8 | 12 | 1.0 |
| TBa [MPa] | 10 | 25 | 30 | 8 |
| Impact resistance | 110 | 120 | 115 | 100 |
| Fuel economy | 120 | 120 | 125 | 100 |
| Flex crack growth resistance | 120 | 120 | 125 | 100 |
| Vibration resistance | 120 | 120 | 130 | 100 |

[Table 6]

| Resin composition | | | | |
| --- | --- | --- | --- | --- |
| | | Example | | Comparative Example |
| | 3-1 | 3-2 | 3-3 | 3-1 |
| Thermoplastic resin | 100 | 100 | 100 | 100 |
| Microfibrillated plant fiber | | | | 10 |
| Oil | | | | 10 |
| Liquid mixture 1 (Amount of microfibrillated plant fiber) | 10 (5) | 20 (10) | | |
| Liquid mixture 2 (Amount of microfibrillated plant fiber) | | | 20 (10) | |
| E*a/E*b | 1.4 | 1.8 | 2.0 | 1.0 |
| TBa/FBa | 2.6 | 3.1 | 3.5 | 2.2 |
| E*a [MPa] | 8 | 12 | 10 | 3 |
| TBa [MPa] | 18 | 15 | 15 | 12 |
| Impact resistance | 130 | 160 | 170 | 100 |
| Flexural modulus | 200 | 220 | 240 | 100 |
| Bending strength | 100 | 108 | 105 | 100 |
| Flex crack growth resistance | 110 | 120 | 120 | 100 |
| Vibration resistance | 110 | 120 | 120 | 100 |

As shown in Tables 4 and 5, the rubber compositions of the examples satisfying the relationships (1) and (2): E*a/E*b ≥ 1.3 and TBa/FBa ≥ 2.6 exhibited good microfibrillated plant fiber orientation and dispersion and excellent overall performance in terms of impact resistance, fuel economy, and flex crack growth resistance (the sum of the indices of impact resistance, fuel economy, and flex crack growth resistance). The rubber compositions also had good vibration resistance.

As shown in Table 6, the resin compositions of the examples satisfying relationships (1) and (2) exhibited good microfibrillated plant fiber orientation and dispersion and excellent overall performance in terms of impact resistance, flexural modulus, bending strength, and flex crack growth resistance (the sum of the indices of impact resistance, flexural modulus, bending strength, and flex crack growth resistance). The resin compositions also had good vibration resistance.

## Claims

1. A polymer composition, comprising:

   at least one polymer; and
   at least one microfibrillated plant fiber,
   the polymer composition satisfying the following relationships (1) and (2):

$$E*a/E*b \geq 1.3 \quad (1);$$

   and

$$TBa/FBa \geq 2.6 \quad (2)$$

   wherein E*a/E*b represents a ratio of a complex modulus E*a (MPa) in an extrusion direction to a complex modulus E*b (MPa) in a direction orthogonal to the extrusion direction, and TBa/FBa represents a ratio of a stress at break TBa (MPa) during stretching in the extrusion direction to a stress FBa (MPa) at elongation of 50% of an elongation at break during stretching in the extrusion direction.

2. The polymer composition according to claim 1,
   wherein the polymer composition satisfies E*a/E*b ≥ 1.5.

3. The polymer composition according to claim 1,
   wherein the polymer composition satisfies E*a/E*b ≥ 2.0.

4. The polymer composition according to any one of claims 1 to 3,
   wherein the polymer composition satisfies TBa/FBa ≥ 3.0.

5. The polymer composition according to any one of claims 1 to 3,
   wherein the polymer composition satisfies TBa/FBa ≥ 3.4

6. The polymer composition according to any one of claims 1 to 5,
   wherein the polymer composition comprises 0.5 to 30 parts by mass of the microfibrillated plant fiber per 100 parts by mass of the polymer.

7. The polymer composition according to any one of claims 1 to 6,
   wherein the microfibrillated plant fiber in the polymer composition has an average aspect ratio of 10 to 1000.

8. The polymer composition according to any one of claims 1 to 7,
   wherein the microfibrillated plant fiber in the polymer composition has an average fiber diameter of 10 μm or less.

9. The polymer composition according to any one of claims 1 to 8,
   wherein the polymer composition is prepared by a method comprising:

   step 1 of preparing a liquid mixture containing the microfibrillated plant fiber, at least one oil, and at least one organic acid amine; and
   step 2 of preparing a polymer composition containing the liquid mixture and the polymer.

10. The polymer composition according to claim 9,
    wherein in step 1, the oil comprises at least one selected from the group consisting of glycerol fatty acid triesters of plant origin and saponified products of glycerol fatty acid triesters of plant origin, and the organic acid amine comprises at least one selected from the group consisting of aliphatic carboxylic acids, alicyclic carboxylic acids, and aromatic carboxylic acids.

11. The polymer composition according to claim 10,
    wherein the organic acid amine comprises an aliphatic carboxylic acid.

12. The polymer composition according to any one of claims 1 to 11,
    wherein the polymer comprises at least one rubber selected from the group consisting of natural rubbers, polybutadiene rubbers, and styrene-butadiene rubbers.

13. The polymer composition according to any one of claims 1 to 12,
    wherein the polymer composition contains at least one selected from the group consisting of carbon black and silica.

<div align="center">

**INTERNATIONAL SEARCH REPORT**

</div>

| | International application No. |
|---|---|
| | PCT/JP2020/039532 |

A. CLASSIFICATION OF SUBJECT MATTER
Int. Cl. C08K7/00(2006.01)i, C08L1/00(2006.01)i, C08L101/00(2006.01)i
FI: C08L101/00, C08K7/00, C08L1/00

According to International Patent Classification (IPC) or to both national classification and IPC

B. FIELDS SEARCHED

Minimum documentation searched (classification system followed by classification symbols)
Int. Cl. C08K7/00, C08L1/00, C08L101/00

Documentation searched other than minimum documentation to the extent that such documents are included in the fields searched
Published examined utility model applications of Japan     1922-1996
Published unexamined utility model applications of Japan   1971-2020
Registered utility model specifications of Japan           1996-2020
Published registered utility model applications of Japan   1994-2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2019-156868 A (SUMITOMO RUBBER INDUSTRIES, LTD.) 19 September 2019, claims, paragraphs [0032], [0106]-[0113], examples | 1-8, 11-13 |
| A | | 9-10 |
| X | JP 2015-10136 A (SUMITOMO RUBBER INDUSTRIES, LTD.) 19 January 2015, claims, paragraph [0019], examples | 1-8, 12-13 |
| A | | 9-11 |
| A | JP 2013-253222 A (SUMITOMO RUBBER INDUSTRIES, LTD.) 19 December 2013, entire text | 1-13 |

☐ Further documents are listed in the continuation of Box C. ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 11.12.2020 | 22.12.2020 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

INTERNATIONAL SEARCH REPORT

Information on patent family members

International application No.

PCT/JP2020/039532

| Patent Documents referred to in the Report | Publication Date | Patent Family | Publication Date |
|---|---|---|---|
| JP 2019-156868 A | 19.09.2019 | (Family: none) | |
| JP 2015-10136 A | 19.01.2015 | (Family: none) | |
| JP 2013-253222 A | 19.12.2013 | US 2013/0303657 A1 entire text EP 2662405 A1 CN 103387700 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013253222 A
- JP 2009202865 A
- US 4414370 A
- JP 59006207 A
- JP H1313522 A
- US 5010166 A

**Non-patent literature cited in the description**

- *Toagosei Co., Ltd.,* vol. 3, 42-45